# EUROPÄISCHE PATENTSCHRIFT

(11) **EP 3 919 683 B1**
(45) Veröffentlichungstag und Bekanntmachung des Hinweises auf die Patenterteilung: **30.08.2023**
(21) Anmeldenummer: 20177827.1
(22) Anmeldetag: 02.06.2020
(51) Int. Cl.: E01D 15/14, F16B 2/14, F16B 5/00

(54) **VERBINDUNGSVORRICHTUNG**
CONNECTING DEVICE
DISPOSITIF DE RACCORDEMENT

(43) Veröffentlichungstag der Anmeldung: 08.12.2021
(73) Patentinhaber: General Dynamics European Land Systems-Bridge Systems GmbH, 67655 Kaiserslautern (DE)
(72) Erfinder: RUST, Christian, 67659 Kaiserslautern (DE)
(74) Vertreter: Patentanwälte Dr. Keller, Schwertfeger Partnerschaft mbB

(56) Entgegenhaltungen:
- WO-A1-2007/057635
- DE-A1- 3 803 292
- FR-A1- 2 490 297
- KR-B1- 101 986 978
- US-A- 5 356 692

## Beschreibung

Die vorliegende Erfindung betrifft eine Verbindungsvorrichtung sowie ein Bauteil, das mit der Verbindungsvorrichtung verbunden ist, insbesondere betrifft die Erfindung ein Pontonelement, das mit der Verbindungsvorrichtung verbunden ist, sowie eine entsprechende Pontonbrücke.

DE 38 03 292 A1 beschreibt eine Verbindungsvorrichtung mit den Merkmalen des Oberbegriffs des Anspruchs 1.

Pontonbrücken bestehen in der Regel aus einzelnen Pontonelementen, die miteinander verbunden sind. Jedes einzelne Pontonelement ist hierbei ein eigener Schwimmkörper.

Pontonbrücken haben im Vergleich zu klassischen Brücken den Vorteil, dass sie schnell und günstig gebaut werden können. Da Pontonbrücken in der Regel aus Einzelelementen zusammengesetzt sind, können sie sehr flexibel gestaltet und somit für unterschiedlichste Zwecke eingesetzt werden.

So finden Pontonbrücken beispielsweise Anwendung bei der Überquerung eines Flusses, wenn aufgrund des Untergrunds eine feste Brücke nicht oder nur mit unverhältnismäßig großem Aufwand gebaut werden könnte. Darüber hinaus werden Pontonbrücken dann eingesetzt, wenn beispielsweise aufgrund von Zerstörungen einer Brücke nach Naturkatastrophen oder Kriegseinsätzen schnell ein Ersatz zur Verfügung stehen muss.

In vielen Fällen sind Pontonbrücken provisorische Brücken. In einigen Fällen könne diese jedoch auch eine Dauerlösung sein.

Darüber hinaus werden Pontonplattformen in Ufernähe eingesetzt. Der Vorteil solcher Pontonplattformen liegt darin, dass sie sich mit steigendem bzw. fallendem Wasserstand heben bzw. senken. Diese Eigenschaft wird insbesondere bei Anlegestellen von Booten genutzt, so dass die Boote und die Anlegestellen bei wechselndem Wasserstand im Wesentlichen immer die gleiche Höhe haben.

Die Vielzahl von Anwendungsmöglichkeiten und die hohe Flexibilität der Pontonbrücke sind u.a. auch darauf zurückzuführen, dass einzelne Pontonelemente flexibel verknüpft werden können, um eine Anpassung der Pontonbrücke bzw. Pontonplattform an die äußeren Gegebenheiten vornehmen zu können.

Da die Pontonbrücken bzw. Pontonplattformen hohen Belastungen ausgesetzt sind, beispielsweise aufgrund von die Brücke querenden Fahrzeugen, Wind oder wechselnden Wasserständen, bestehen hohe Anforderungen an die Stabilität der Verbindung der einzelnen Pontonelemente zur Ausbildung einer Pontonbrücke bzw. Pontonplattform. Insbesondere muss die Verbindung zwischen einzelnen Pontonelementen hohe Kräfte aufnehmen können. Werden Pontonbrücken beispielsweise als Ersatzbrücken für zerstörte Brücken benötigt oder ist eine rasche Überquerung eines Flusses an Stellen notwendig, an denen keine Brücken existieren, so besteht neben der Anforderung an eine hohe Stabilität der Verbindung zwischen den Pontonelementen auch noch die Anforderung, die Pontonelemente schnell miteinander verbinden zu können.

Es ist Aufgabe der vorliegenden Erfindung, eine Verbindungsvorrichtung bereitzustellen, mit Hilfe deren es möglich ist, Bauteile, insbesondere Pontonelemente schnell und sicher miteinander zu verbinden. Darüber hinaus ist es Aufgabe der Erfindung, eine stabile Pontonbrücke bzw. Pontonplattform bereitzustellen, die auch hohen Belastungen standhält.

Erfindungsgemäß wird die Aufgabe gelöst durch eine Verbindungsvorrichtung gemäß Anspruch 1 sowie eine Pontonbrücke mit wenigstens einem Pontonelement, das mit einer solchen Verbindungsvorrichtung verbunden ist.

Die erfindungsgemäße Verbindungsvorrichtung umfasst wenigstens einen Grundkörper und wenigstens eine Verbindungseinheit mit einem Befestigungselement, einem Verstellkörper mit einer Längsachse und einer Verstellvorrichtung, wobei der Abstand zwischen dem Befestigungselement und dem Grundkörper veränderbar ist, wobei der Grundkörper eine Wand mit einem ersten Führungselement aufweist, wobei das Befestigungselement eine Wand mit einem zweiten Führungselement aufweist, wobei die Wand des Grundkörpers, an der das erste Führungselement vorgesehen ist, und die Wand des Befestigungselements, an der das zweite Führungselement vorgesehen ist, zueinander weisen, wobei der Verstellkörper zwischen dem Grundkörper und dem Befestigungselement angeordnet ist und über eine erste Querseite verfügt, die zum Grundkörper weist, sowie über eine zweite Querseite, die zum Befestigungselement weist, wobei der Verstellkörper mittels der Verstellvorrichtung entlang einer Achse parallel zur Längsachse des Verstellkörpers verschiebbar ist und ein Gegenführungselement aufweist, das mit dem ersten oder zweiten Führungselement wechselwirkt, und wobei das Gegenführungselement des Verstellkörpers gegenüber der Längsachse des Verstellkörpers geneigt ist.

Bei der Verbindungsvorrichtung handelt es sich im Wesentlichen um eine Klemmvorrichtung. Mit Hilfe des Verstellkörpers ist es möglich, den Abstand zwischen dem Grundkörper und dem Befestigungselement zu verändern, so dass hierdurch eine Klemmverbindung erzielt werden kann.

Der Verstellkörper wird mittels der Verstellvorrichtung senkrecht zu der von dem Grundkörper und dem Befestigungselement gebildeten Achse verschoben. Dadurch, dass der Verstellkörper ein Gegenführungselement aufweist, das gegenüber der Längsachse des Verstellkörpers geneigt ist, treibt der Verstellkörper den Grundkörper und das Befestigungselement in der Art eines Keils auseinander, wenn dieser in einer vorgegebenen Richtung entlang einer Achse parallel zur Längsachse des Verstellkörpers verschoben wird. Hierbei kann der Verstellkörper beispielsweise selbst als Keil mit geneigten Querseiten ausgebildet sein, wobei die Querseiten bereits als Gegenführungselement dienen können.

Bei der erfindungsgemässen Verbindungsvorrichtung umfasst die Verstellvorrichtung eine Verstellstange und ein Verstellmittel, wobei die Verstellstange mit dem Verstellkörper verdrehbar verbunden ist. Das Verstellmittel kann beispielsweise eine Schraube oder ein Griff an der Stirnseite der Verstellstange sein. Mit Hilfe des Verstellmittels lässt sich die Verstellstange betätigen, so dass der mit der Verstellstange verbundene Verstellkörper einfach verschoben werden kann. Ein besonders gleichmäßiges und kontrolliertes Verschieben des Verstellkörpers entlang der Verstellstange lässt sich beispielsweise dadurch erreichen, dass der Verstellkörper eine Bohrung aufweist und die Verstellstange in der Bohrung drehbar angeordnet ist, wobei in der Bohrung ein Gewinde vorgesehen ist und zumindest der Abschnitt der Verstellstange, der in der Bohrung gelagert wird, einen Gewindeabschnitt aufweist.

Um sicherzustellen, dass bei dieser Ausführungsform der Verstellkörper entlang der Verstellstange verschoben wird und nicht die Verstellstange selbst, ist bei der erfindungsgemässen Verbindungsvorrichtung ein Fixierungselement vorgesehen, in dem die Verbindungsstange ortsfest und drehbar gelagert ist.

Es ist von Vorteil, dass das erste Führungselement mit einem ersten Gegenführungselement am Verstellkörper und/oder das zweite Führungselement mit einem zweiten Gegenführungselement am Verstellkörper wechselwirken, wobei das erste Führungselement und das erste Gegenführungselement eine lineare Führungseinheit bilden und/oder das zweite Führungselement und das zweite Gegenführungselement eine lineare Führungseinheit bilden. Hierdurch wird sichergestellt, dass der Verstellkörper zuverlässig entlang eines vorgegebenen Verschiebewegs geführt werden kann und die Verbindungsvorrichtung beispielsweise auch in optisch nicht kontrollierbaren Anwendungen eingesetzt werden kann.

Hierbei hat es sich als vorteilhaft erwiesen, dass das erste Führungselement und das erste Gegenführungselement im Querschnitt komplementär zueinander ausgebildet sind und/oder das zweite Führungselement und das zweite Gegenführungselement im Querschnitt komplementär zueinander ausgebildet sind.

Hierbei ist es besonders bevorzugt, dass das Führungselement oder das Gegenführungselement als Nut ausgebildet ist, wobei vorzugsweise wenigstens eine Seitenwand der Nut eine Seitenführung aufweist. Eine beispielsweise entlang der Wand des Grundkörpers und/oder entlang der Wand des Befestigungselements vorgesehene Nut führt den Verstellkörper sicher in seiner Bewegung parallel zu seiner Längsachse. Die Seitenführungen, die beispielsweise in der Nut als Vertiefungen in der Seitenwand der Nut vorgesehen sein können, sorgen dafür, dass der Verstellkörper sicher an dem Befestigungselement bzw. dem Grundkörper gehalten wird und sich insbesondere nicht in einer Ebene senkrecht zur seiner Längsachse verschiebt.

Um eine Klemmverbindung mit einem kontrollierbaren Anpressdruck zu erhalten, ist es vorteilhaft, dass das Führungselement und das Gegenführungselement jeweils einen Führungsabschnitt aufweisen, der über die gleiche Neigung gegenüber der Längsachse des Verstellkörpers verfügt.

Bei einer Ausführungsform, bei der das Führungselement und/oder das Gegenführungselement geneigte Seitenführungen aufweist, die beispielsweise in der Seitenwand einer Nut vorgesehen sind, ist es möglich, mittels des Verstellkörpers den Abstand zwischen Befestigungselement und Grundkörper so zu verändern, so die Verstellvorrichtung von einer geöffneten in eine geschlossene Stellung und umgekehrt überführbar ist.

Unter einer geöffneten Stellung wird eine Stellung verstanden, in der die Verbindungsvorrichtung nicht an einem Element befestigt ist. Sie kann auch als entspannte Stellung bezeichnet werden. Eine geschlossene oder verspannte Stellung ist eine Stellung, in der die Verbindungsvorrichtung mit einem Element verbunden ist.

Es ist bevorzugt, dass ein Verbindungsteil vorgesehen ist, welches das Befestigungselement und den Grundkörper direkt oder indirekt verbindet, wobei das Verbindungsteil vorzugsweise eine Verbindungsstange aufweist. Wenn eine Verbindungsstange vorgesehen ist, die das Befestigungselement und den Grundkörper miteinander verbindet, können das Befestigungselement und/oder der Grundkörper entlang der Verbindungsstange verschoben werden. Diese Verbindungsstange sorgt dafür, dass das Befestigungselement senkrecht zur Längsachse des Verstellkörpers verschoben wird, um den Abstand zwischen Grundkörper und Verstellkörper zu verändern, während das Befestigungselement und der Grundkörper in der gleichen Ebene gehalten werden.

Bei einer bevorzugten Ausführungsform weisen das Befestigungselement und der Grundkörper die gleiche Form auf. In diesem Fall kann der Grundkörper die gleiche Funktion wie das Befestigungselement übernehmen. Bei dieser Ausführungsform kann die Verbindungsvorrichtung darüber hinaus sehr kompakt gestaltet werden.

Bei einer weiteren Ausführungsform ist der Grundkörper blockartig ausgebildet, wobei der Grundkörper einen mittleren Abschnitt und zwei entgegengesetzt liegende Endabschnitte aufweist, wobei an einem Endabschnitt die Verbindungseinheit und an dem entgegengesetzt liegenden Endabschnitt eine weitere Verbindungseinheit oder ein Bauteil vorgesehen sind. Der Grundkörper kann hierbei als eine Art Adapter für verschiedene Bauteile dienen, so dass beispielsweise ein Pontonelement mit einem Bauteil wie etwa einem Geländer verbunden werden kann. Aufgrund des Vorsehens eines Grundkörpers können verschiedene Element wie etwa Pontonelemente mit Abstand voneinander miteinander verbunden werden.

Bei einer bevorzugten Weiterbildung erweitert sich der Grundkörper zu zumindest einem Endabschnitt. Beispielsweise kann der Grundkörper sich zu einer Seite trichterförmig erweitern Diese geometrische Form ist insbesondere dann von Vorteil, wenn an dem Element, an dem die Verbindungsvorrichtung angebracht werden soll, eine Aussparung mit einem im Wesentlichen komplementären Querschnitt vorgesehen ist. Dies ermöglicht eine einfache Positionierung der Verbindungsvorrichtung an dem Element, an dem sie angebracht werden soll, da die Bewegung der Verbindungsvorrichtung gegenüber dem Element, mit dem sie verbunden werden soll, bereits in zwei Raumrichtungen eingeengt wird.

Es ist von Vorteil, dass zwei Grundkörper übereinander und im Abstand voneinander angeordnet sind, wobei die beiden Grundkörper miteinander verbunden sind. Hierbei können Verbindungsvorrichtungen bereitgestellt werden, die in vertikaler Richtung zwei übereinander angeordnete Grundelemente mit entsprechenden Verbindungseinheiten aufweisen, um hohe Elemente, wie etwa hohe Pontonelemente, sicher, insbesondere drehsicher an ihren Seitenwänden miteinander zu verbinden.

Bei dieser Ausführungsform ist es besonders bevorzugt, dass das Befestigungselement der am ersten Grundkörper vorgesehenen Verbindungseinheit und das Befestigungselement der am zweiten Grundkörper vorgesehenen Verbindungseinheit mittels einer gemeinsamen Verstellvorrichtung verschiebbar sind und die erste Verbindungseinheit achssymmetrisch zur zweiten Verbindungseinheit ausgebildet ist. Mit Hilfe dieser Anordnung ist es möglich, beide Verbindungseinheiten gleichzeitig so zu betätigen, dass sie gleichzeitig von einer geöffneten Stellung in eine geschlossene Stellung und umgekehrt überführbar sind.

Gegenstand der vorliegenden Erfindung ist eine Pontonbrücke, umfassend wenigstens ein Pontonelement und wenigstens eine Verbindungsvorrichtung gemäß der vorliegenden Erfindung, wobei vorzugsweise wenigstens zwei Pontonelemente vorgesehen sind, die mittels einer Verbindungsvorrichtung miteinander verbunden sind.

Der Begriff Pontonbrücke umfasst hier nicht nur brückenartige Gebilde sondern auch Plattformen in Ufernähe. Aus sprachlichen Gründen wurde nur der Begriff Pontonbrücke gewählt.

Es ist von Vorteil, dass das Pontonelement eine Aussparung zur Aufnahme eines Abschnitts der Verbindungsvorrichtung aufweist, wobei der in der Aussparung aufgenommene Abschnitt der Verbindungsvorrichtung in der Aussparung verklemmbar ist. Hierdurch lässt sich die Verbindungsvorrichtung sicher an dem Pontonelement halten.

Bei einer bevorzugten Weiterbildung verfügt die Aussparung zur Aufnahme eines Abschnitts der Verbindungsvorrichtung im Querschnitt über eine Kontur, deren Grundform komplementär zu der Kontur des Abschnitts der Verbindungsvorrichtung ist, welche in der Aussparung des Pontonelements angeordnet ist. Wie bereits oben angeführt kann dadurch eine einfache Vorpositionierung der Verbindungsvorrichtung an dem Pontonelement vorgenommen werden

Vorzugsweise weist die Aussparung eine Anschlagfläche für die wenigstens eine Verbindungseinheit auf. Insbesondere weist die Rückwand und/oder die Seitenwand der Aussparung eine Anschlagfläche für das Befestigungselement auf. Hierdurch kann auf eine Vielzahl zusätzlicher Befestigungsmaßnahmen verzichtet werden und es reicht eine Klemmverbindung, um die Verbindungsvorrichtung sicher an dem Pontonelement zu halten.

Die Aussparung ist beispielsweise eine an ihren beiden Endabschnitten offene Nut mit einer in Längsrichtung nach außen weisenden Öffnung, wobei die Nut im Inneren zumindest abschnittsweise breiter ist als die Öffnung der Nut.

Bevorzugte Ausführungsformen werden anhand der beigefügten Zeichnungen näher erläutert, in denen zeigen:
- Fig. 1: eine erste Ausführungsform einer Verbindungsvorrichtung in einer ersten Funktionsstellung,
- Fig. 2: die in Fig. 1 dargestellte Verbindungsvorrichtung in einer zweiten Funktionsstellung,
- Fig. 3: Teile einer Pontonbrücke,
- Fig. 4: einen Montageschritt zum Verbinden zweier Pontonelemente zu einer Pontonbrücke mit einer Verbindungsvorrichtung gemäß einer ersten Ausführungsform,
- Fig. 5: zwei miteinander verbundene Pontonelemente in einer vorpositionierten Stellung,
- Fig. 6: zwei fest miteinander verbundene Pontonelemente,
- Fig. 7: eine zweite Ausführungsform einer Verbindungsvorrichtung in einer ersten Funktionsstellung,
- Fig. 8: die in Fig. 7 dargestellte Verbindungsvorrichtung in einer zweiten Funktionsstellung,
- Fig. 9: Teile einer Pontonbrücke,
- Fig. 10: einen Montageschritt zum Verbinden zweier Pontonelemente zu einer Pontonbrücke mit einer Verbindungsvorrichtung gemäß einer ersten Ausführungsform,
- Fig. 11: zwei miteinander verbundene Pontonelemente in einer vorpositionierten Stellung und
- Fig. 12: zwei fest miteinander verbundene Pontonelemente.

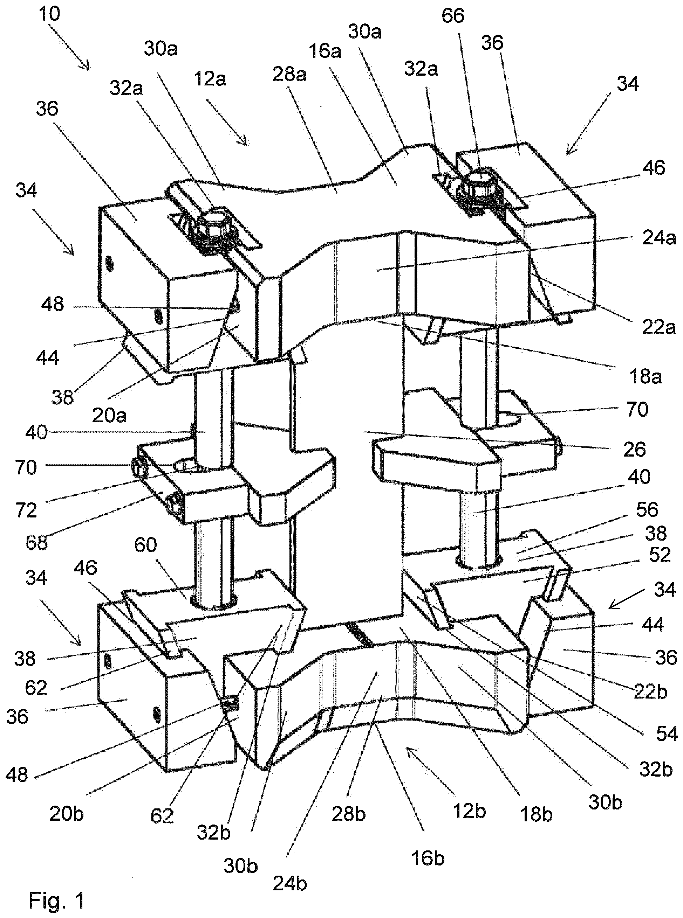

Fig. 1 zeigt eine Verbindungsvorrichtung 10 gemäß einer ersten Ausführungsform in einer ersten Funktionsstellung. Bei dieser Funktionsstellung handelt es sich um eine Stellung, in der die Verbindungsvorrichtung 10 sich in einer teilweise geöffneten oder entspannten Stellung befindet. In dieser Stellung ist es möglich, die Verbindungsvorrichtung 10 mit dem gewünschten Element wie etwa einem Bauteil oder Pontonelement, mit welchem es verbunden werden soll, zu verbinden.

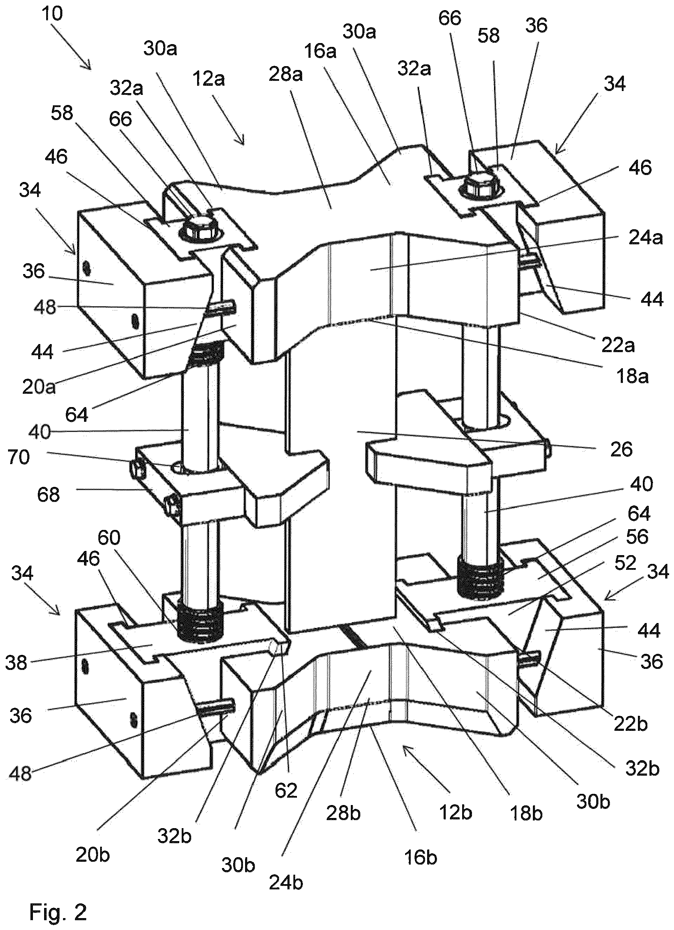

In Fig. 2 ist die Verbindungsvorrichtung der Fig. 1 in einem teilweise geschlossenen bzw. verspannten oder montierten Zustand gezeigt, in dem die Verbindungsvorrichtung 10 zwei Bauteile miteinander verbindet.

Die Verbindungsvorrichtung 10 umfasst zwei blockartige Grundkörper 12a, 12b jeweils mit einer Oberseite 16a, 16b, einer Unterseite 18a, 18b, einer ersten Stirnseite 20a, 20b, einer zweiten Stirnseite 22a, 22b, und zwei entgegengesetzt liegenden Längsseiten 24a, 24b.

Die beiden blockartigen Grundkörper 12a, 12b sind identisch aufgebaut. Sie sind übereinander und parallel zueinander mit Abstand voneinander angeordnet und über eine Halterung 26 miteinander verbunden, wobei die beiden Unterseiten 18a, 18b des Grundkörpers 12a, 12b einander gegenüber liegen. Bei dieser Anordnung weisen somit die Oberseite 16a des ersten Grundkörpers 12a und die Oberseite 16b des zweiten Grundkörpers 16b jeweils nach außen.

Der Grundkörper 12a, 12b weist einen Mittelabschnitt 28a, 28b und zwei bezüglich des Mittelabschnitts 28a, 28b entgegengesetzt liegende Endabschnitte 30a, 30b auf. Die erste und zweite Stirnseite 20a, 20b, 22a, 22b des Grundkörpers 12a, 12b sind gleichzeitig die erste bzw. zweite Stirnseite des Endabschnitts 30a, 30b. Der Grundkörper 12a, 12b verjüngt von sich von einem Endabschnitte 30a, 30b des Grundkörpers 12a, 12b zum Mittelabschnitt 28a, 28b des Grundkörpers 12a, 12b und erweitert sich dann wieder in Richtung des anderen Endabschnitts 30a, 30b des Grundkörpers 12a, 12b. Die Längsseiten 24a, 24b sind aufgrund dessen im Endabschnitt des Grundkörpers 12 abgeschrägt. Der Grundkörper 12a, 12b weist somit eine achssymmetrische Trichterform auf.

An jeder Stirnseite 20a, 20b, 22a, 22b des Grundkörpers 12a, 12b ist eine Nut 32a, 32b vorgesehen, die einen T-förmigen Querschnitt aufweist, sich von der Oberseite 16a, 16b zur Unterseite 18a, 18b des Grundkörpers 12a, 12b erstreckt und zur Oberseite 16a, 16b und Unterseite 18a, 18b des Grundkörpers 12a, 12b offen ist. Jede Nut 32a, 32b weist gegenüber der Stirnseite 20a, 20b, 22a, 22b des Grundkörpers 12a, 12b eine vorgegebene Neigung auf.

An jeder Stirnseite der beiden Grundkörper 20a, 20b, 22a, 22b ist eine Verbindungseinheit 34 vorgesehen.

Jede Verbindungseinheit 34 umfasst ein Befestigungselement 36, einen Verstellkörper 38 und eine Verstellvorrichtung. Die Verstellvorrichtung umfasst wiederum eine Verstellstange 40 und ein Verstellmittel.

Im Folgenden wird eine Verbindungseinheit 34 an einer Stirnseite 20a, 20b, 22a, 22b des Grundkörpers 12a, 12b beschrieben.

Das Befestigungselement 36 hat eine blockartige Grundstruktur mit einer abgeschrägten Seitenfläche 44. Das Befestigungselement 36 ist an der Stirnseite 20a, 20b, 22a, 22b des Grundkörpers 12a, 12b angeordnet, wobei die abgeschrägte Seitenfläche 44 des Befestigungselements 36 zur Stirnseite 20a, 20b, 22a, 22b des Grundkörpers 12a, 12b weist.

An der zum Grundkörper 12a, 12b weisenden Seite des Befestigungselements 36 ist eine T-förmige Nut 46 vorgesehen, die spiegelbildlich zu der Nut 32a, 32b im Grundkörper 12a, 12b geneigt ist.

Zwischen dem Befestigungselement 36 und dem Grundkörper 12a, 12b sind senkrecht zur Stirnseite 20a, 20b, 22a, 22b des Grundkörpers 12a, 12b zwei parallel und im Abstand angeordnete Verbindungsstangen 48 vorgesehen. Die Verbindungsstangen 48 verbinden das Befestigungselement 36 und den Grundkörper 12a, 12b 12a, 12b, wobei das eine Ende jeder Verbindungsstange fest mit dem Grundkörper 12a, 12b verbunden ist und das andere Ende der Verbindungsstange 48 in einer Öffnung des Befestigungselements 36 verschiebbar gelagert ist. Die beiden Verbindungsstangen 148 bilden somit ein Verbindungsteil, mit Hilfe dessen sich das Befestigungselement 36 entlang der Verbindungsstange 48 verschieben lässt, um den Abstand zwischen Befestigungselement 36 und Grundkörper 12a, 12b variieren zu können. Die Verbindungsstange 48 sorgt dafür, dass das Befestigungselement 36 und der Grundkörper 12a, 12b sich immer in der gleichen Ebene bewegen.

Bei einer nicht dargestellten Ausführungsform ist die Verbindungsstange 48 fest mit dem Befestigungselement 36 verbunden und verschiebbar in einer Öffnung des Grundkörpers 12a, 12b angeordnet.

Der Verstellkörper 38 ist zwischen dem Grundkörper 12a, 12b und dem Befestigungselement 36 sowie zwischen den beiden parallelen Verbindungsstangen 48 angeordnet. Er ist als keilförmiger Block mit einer Längsachse ausgebildet, wobei die Keilspitze zur Oberseite 16a, 16b des Grundkörpers 12a, 12b zeigt.

Der Verstellkörper 38 weist zwei entgegengesetzt liegende Längsseiten 52, zwei entgegengesetzt liegende Querseiten 54, eine Oberseite 56 und einer Unterseite 58 auf. Weiterhin ist eine parallel zur Längsachse des Verstellkörpers 38 weisende Durchgangsbohrung 60 mit einem Gewinde vorgesehen.

Die Querseiten 54 des Verstellkörpers 38 sind gegenüber der Längsachse des Verstellkörpers 38 und somit gegenüber der Durchgangsbohrung 60 geneigt. Hierbei entspricht der Neigungswinkel der Querseiten 54 dem Neigungswinkel der Nut 46 in dem Befestigungselement 36 bzw. dem Neigungswinkel der Nut 32a, 32b in dem Grundkörper 12a, 12b, so dass die Querseiten des Verstellkörpers 38 entlang der Stirnseite 20a, 20b, 22a, 22b des Grundkörpers 12a, 12b bzw. entlang der abgeschrägten Seitenfläche 44 des Befestigungselements 36 gleiten können. Die Querseiten 54 des Verstellkörpers 38 bilden Kontaktseiten zu dem Befestigungselement 36 bzw. dem Grundkörper 12a, 12b.

An den jeweiligen Endabschnitten der Längsseiten des Verstellkörpers 38 sind Führungsleisten 62 vorgesehen, die sich entlang der beiden schrägen Kanten der beiden Längsseiten 52 des Verstellkörpers 38 erstrecken. Im Querschnitt weist der Verstellkörper 38 somit eine doppel-T-förmige Kontur auf. Die Größe der Führungsleisten 62 und die Breite der Querseiten 54 des Verstellkörpers 38 sind so gewählt, dass der Endabschnitt passgenau in der T-förmigen Nut 46 des Befestigungselements 36 bzw. in der T-förmigen Nut 32a, 32b des Grundkörpers 12a, 12b verschiebbar ist. Der Endabschnitt des Verstellkörpers 38 bildet somit ein Profilelement, das in der T-förmigen Nut 46 des Befestigungselements 36 bzw. in der T-förmigen Nut 32a, 32b des Grundkörpers 12a, 12b verschoben werden kann. Das Profilelement bildet in Wechselwirkung mit den entsprechenden Nuten 32a, 32b, 36 eine lineare Führungseinheit, wobei die Führungsleisten 62 als Seitenführungen dienen. Die Führungsleisten 62 sind somit auch Teil eines Gegenführungselements für das als Nut 32a, 32b ausgebildete Führungselement.

Die Verstellstange 40 weist an beiden Endabschnitten jeweils einen Gewindeabschnitt 64 (siehe Fig. 2) auf. An zumindest einer Stirnseite der Verstellstange 40 ist ein Verstellmittel in Form einer Schraube 66, insbesondere eine Sechskantschraube angebracht. Anstelle der Schraube 66 können auch andere bekannte Verstellmittel wie etwa Griffe verwendet werden.

Ein Endabschnitt der Verstellstange 40 befindet sich in der Durchgangsbohrung 60 des Verstellkörpers 38, wobei der Gewindeabschnitt 64 der Verstellstange 40 mit dem Gewinde der Durchgangsbohrung 60 wechselwirkt und das keilförmige Ende des Verstellkörpers 38 in Richtung des Endes der Verstellstange 40 weist.

Weiterhin ist ein Fixierungselement 68 vorgesehen, das an der Halterung 26 befestigt ist und einen Durchgang 70 für die Verstellstange 40 aufweist. Die Verstellstange 40 ist in dem Durchgang 70 des Fixierungselements 68 drehbar gelagert. Zusätzlich ist eine Blockierung gegen eine Längsverschiebung der Verstellstange 40 in dem Fixierungselement 68 vorgesehen. Die Blockierung wird dadurch gebildet, dass die Verstellstange 40 an ihrer Außenseite eine Vertiefung 72 aufweist. Die Vertiefung 72 ist ringförmig an der Außenseite der Verstellstange 40 ausgebildet, wobei das Fixierungselement 68 abschnittsweise in der Vertiefung 72 positioniert ist.

Um die Verbindungseinheit 34 zu betätigen, wird die Schraube 66 mittels eines entsprechenden Werkzeugs gedreht, so dass die Verstellstange 40 gedreht wird. Da die Verstellstange 40 sich zwar dreht, aber nicht längsverschiebbar ist, gleitet der Verstellkörper 38 entlang der Verstellstange 40. Abhängig von der Drehrichtung der Verstellstange 40 gleitet der Verstellkörper 38 entweder in Richtung Oberseite 16a, 16b oder Unterseite 18a, 18b des Grundkörpers 12a, 12b.

Gleitet der Verstellkörper 38 in Richtung Oberseite 16a, 16b des Grundkörpers 12a, 12b wird der Abstand zwischen Grundkörper 12a, 12b und Befestigungselement 36 vergrößert, da der Verstellkörper keilartig zwischen Grundkörper 12a, 12b und Befestigungselement 36 getrieben wird. Da der Grundkörper 12a, 12b und das Befestigungselement 36 über die Verbindungsstangen 48 miteinander verbunden sind, bleiben der Grundkörper 12a, 12b und das Befestigungselement 36 während des Verstellvorgangs in einer Ebene. Die Verbindungvorrichtung 10 wird in ihre geschlossene Stellung (Fig. 2) gebracht.

Wird die Schraube 66 in umgekehrter Richtung gedreht und bewegt sich der Verstellkörper 38 in Richtung Unterseite 18a, 18b des Grundkörpers 12a, 12b, gleitet der Verstellkörper 38 entlang der Führungsleisten 62 an dem Befestigungselement 36 bzw. an dem Grundkörper 12a, 12b. Da das Befestigungselement 36 aufgrund der Verbindungsstange 48 nur eine Bewegung senkrecht zur Längsachse der Verbindungsstange 48 durchführen kann, führt die Bewegung des Verstellkörpers 38 in Richtung Unterseite 18a, 18b des Grundkörpers 12a, 12b dazu, dass das Befestigungselement 36 an das Grundelement 12a, 12b herangezogen wird und sich der Abstand zwischen Befestigungselement 36 und Grundelement 12a, 12b verringert. Die Verbindungsvorrichtung 10 wird dadurch von einer geschlossenen Stellung in eine geöffnete Stellung (Fig. 1) gebracht.

Es sei angemerkt, dass in den Fig. 1 und 2 nicht die Endpositionen einer geschlossenen Stellung bzw. einer geöffneten Stellung der Verbindungsvorrichtung 10 dargestellt sind. Bei vielen Anwendungen ist es nicht notwendig, die Verbindungsvorrichtung 10 von einer vollständig geschlossenen Stellung in eine geöffnete Stellung bzw. umgekehrt zu überführen. Häufig reicht eine teilweise geöffnete Stellung, um eine Verbindungsvorrichtung 10 zu positionieren bzw. eine teilweise geschlossene Stellung um eine Verbindungsvorrichtung 10 an einem Bauteil zu fixieren.

Bei der in den Fig. 1 und 2 dargestellten Verbindungsvorrichtung ist an allen vier Stirnseiten des Grundkörpers 12a, 12b jeweils eine Verbindungseinheit 34 vorgesehen. Hierbei sind jeweils die beiden Verstellstangen 40 an der ersten Stirnseite 20a, 20b des ersten bzw. zweiten Grundkörpers 12a, 12b und die beiden Verstellstangen an der zweiten Stirnseite 22a, 22b des ersten bzw. zweiten Grundkörpers 12a, 12b einstückig miteinander verbunden. Jede Verstellstange 40 weist somit an ihren beiden Enden Gewindeabschnitte 64 auf. Die Länge jeder Verstellstange 40 ist so gewählt, dass die mit dem Gewinde versehenen Endabschnitte der Verstellstangen 40 jeweils zumindest abschnittsweise in der Bohrung des Verstellkörpers 38 angeordnet sind. Die Verstellmittel können an beiden Stirnseiten der Verstellstange 40 vorgesehen sein.

Die Verstellkörper 38 jeder Verbindungseinheit 34 weisen mit der Keilspitze nach Außen in Richtung der Oberseite 16a, 16b des Grundkörpers 12a, 12b, so dass die Verbindungsvorrichtung 10 achssymmetrisch bezüglich einer Achse parallel zur Längsachse der Verstellstange 40 sowie achssymmetrisch bezüglich einer Achse senkrecht zur Längsachse der Verstellstange 40 ausgebildet ist.

Die führt dazu, dass beim Drehen der Verstellstange 40 mittels des Verstellmittels beide mit der Verstellstange 40 verbundenen Verstellkörper 38 den entsprechend zugeordneten Befestigungskörper 36 in die gleiche Richtung bewegen. Beide Befestigungskörper 36 können somit gleichzeitig von einer geöffneten in eine geschlossene Stellung oder umgekehrt gebracht werden.

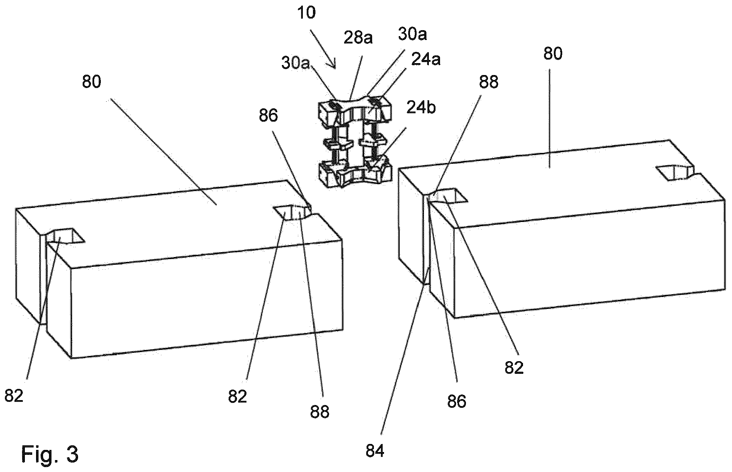

In den Figuren 3 bis 6 ist ein Einsatz der Verbindungsvorrichtung 10 im Zusammenhang mit Pontonelementen 80 gezeigt.

Jedes Pontonelement 80 umfasst eine Aussparung 82. Die Aussparung 82 ist als eine an den beiden Enden offene Nut 84 ausgebildet. Der Querschnitt der Nut 84 weist eine Grundform auf, die im Wesentlichen komplementär zu einer Hälfte der Kontur der Verbindungsvorrichtung 10 im Querschnitt ausgebildet ist. Zwei nebeneinander angeordnete Pontonelemente 80 verfügen somit über eine Aussparung 82, die im Wesentlichen der Kontur des Querschnitts der Verbindungsvorrichtung 10 entspricht.

Im Detail besitzt die Nut 84 eine Nutöffnung 86, die eine geringere Breite aufweist als die Nut 84 im Inneren. Die Breite der Nutöffnung 86 ist etwas größer als die Breite des Mittelabschnitts 28a, 28b des Grundkörpers 12a, 12b, so dass hier ein Spiel vorhanden ist. Die Nut 84 verfügt im Querschnitt über schräge Wandabschnitte 88, an denen die schräg ausgebildeten Längsseiten 24a, 24b eines Endabschnitts 30a, 30b des Grundkörpers 12a, 12b anliegen. Die schrägen Wandabschnitte 88 der Nut 84 bilden hierbei eine Anschlagfläche für die schräg ausgebildeten Längsseiten 24a, 24b der Verbindungsvorrichtung 10, so dass ein Abschnitt der Verbindungsvorrichtung 10 fest in der Aussparung 82 bzw. Nut 84 des Pontonelements 80 befestigt, insbesondere verklemmt werden kann.

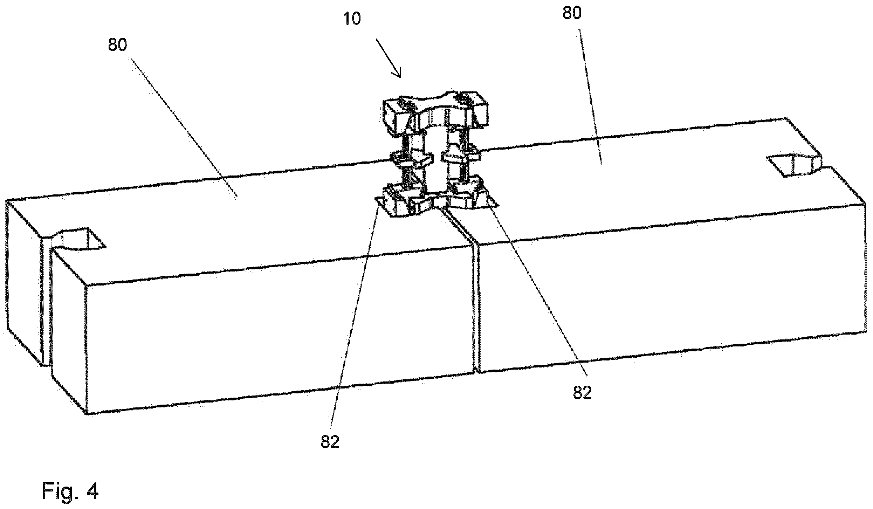

Wie in Fig. 4 zu erkennen ist, werden die beiden Pontonelemente 80 aneinander gelegt und die Verbindungsvorrichtung 10 wird von der Oberseite der Pontonelemente 80 mit Spiel in die Aussparungen 82 der beiden Pontonelemente 80 eingeführt.

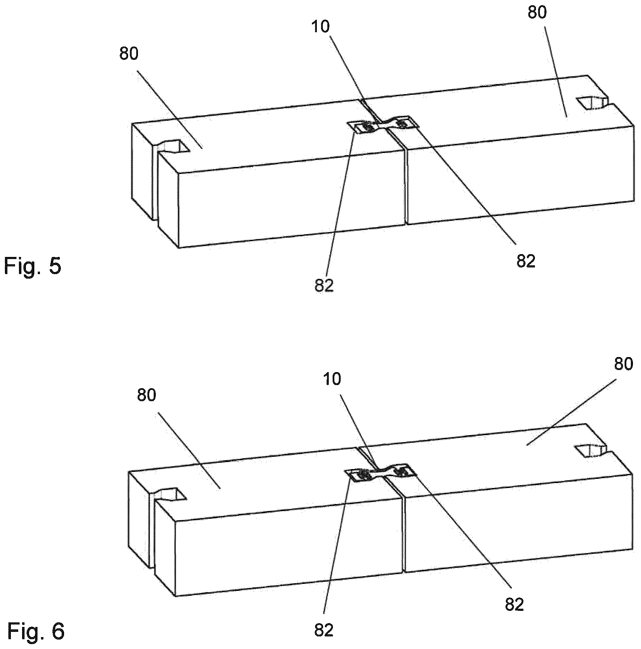

In Fig. 5 ist der Zustand zu erkennen, in dem die Verbindungsvorrichtung 10 sich im Inneren der beiden Aussparungen 82 der zu verbindenden Pontonelemente 80 befindet. Die schräg ausgebildeten Längsseiten 24a, 24b eines Endabschnitts 30a, 30b des Grundkörpers 12a, 12b liegen hierbei an den schrägen Wänden 88 der Nut 84 an, wobei die Verbindungsvorrichtung 10 sich nicht in einer geöffneten oder entspannten Stellung befindet.

In Fig. 6 befindet sich die Verbindungsvorrichtung 10 in den Aussparungen 82 der Pontonelemente 80 in seiner verspannten oder geschlossenen Stellung, wobei das Befestigungselement an der Innenseite der Nut 84 anliegt, so dass die beiden Pontonelemente fest miteinander verbunden sind.

Die in den Figuren 3 bis 5 dargestellte Verbindungsvorrichtung weist den in Fig. 1 dargestellten ungeöffneten Zustand auf. Sobald sich die Verbindungsvorrichtung 10 in den Aussparungen 82 der Pontonelemente 80 gemäß Fig. 5 befindet, kann sie wie oben beschrieben betätigt werden, um die beiden Pontonelemente 80 fest miteinander zu verklemmen (siehe Fig. 6).

Das Vorsehen von vier Verbindungseinheiten 34 an zwei übereinander angeordneten Grundkörpern 12a, 12b hat den Vorteil, dass die Pontonelemente 80 drehsicher gehalten werden können. Die Gefahr, dass sich zwei miteinander verbundene Pontonelemente 80 um ihre Verbindungsachse drehen, ist bei dieser Verbindungsvorrichtung 10 sehr gering.

Bei der vorliegenden Verbindungsvorrichtung 10 ist es nicht zwingend notwendig, dass an beiden Stirnseiten des Grundkörpers Verbindungseinheiten vorgesehen sind.

Beispielsweise kann an einer Stirnseite des Grundkörpers anstelle einer Verbindungseinheit ein Bauteil wie etwa ein Geländer oder ein Pfosten vorgesehen sein, so dass sich beispielsweise Bauteile an Pontonelementen befestigen lassen.

Bei einer nicht dargestellten Ausführungsform können ein Grundkörper sowie die entsprechenden an dem Grundkörper vorgesehenen Verbindungseinheiten weggelassen werden, sodass die Verbindungsvorrichtung nur einen Grundkörper umfasst, an dessen beiden Stirnseiten eine Verbindungseinheit vorgesehen sein kann.

Diese Ausführungsform ist dann sinnvoll, wenn die Höhe der zu verbindenden Bauteile gering ist.

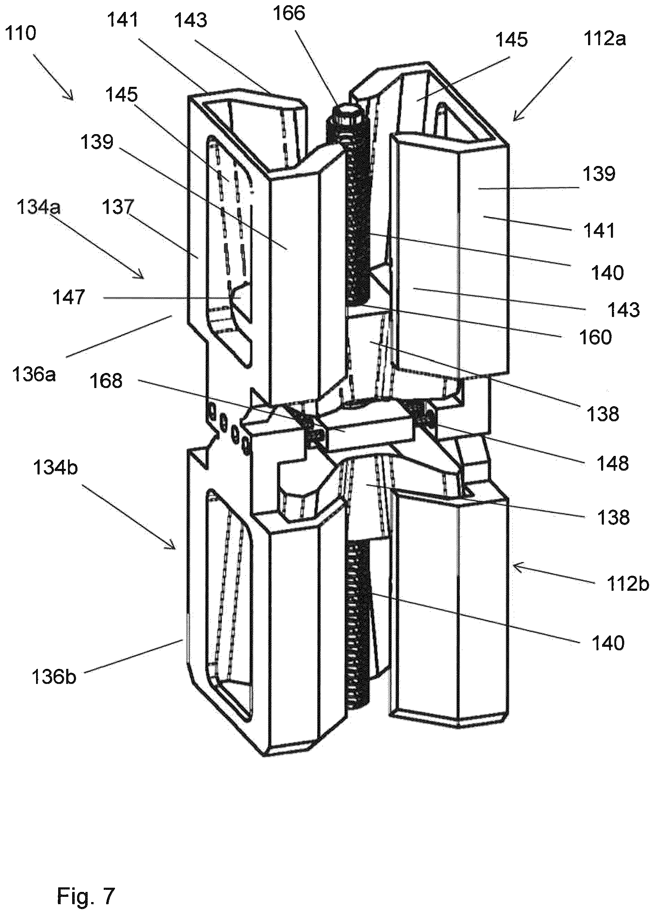

Fig. 7 zeigt eine Verbindungsvorrichtung 110 gemäß einer zweiten Ausführungsform in einer ersten Funktionsstellung. Bei dieser Funktionsstellung handelt es sich um eine Stellung, in der die Verbindungsvorrichtung 110 sich in einer teilweise geöffneten oder entspannten Stellung befindet. In dieser Stellung ist es möglich, die Verbindungsvorrichtung 110 mit dem gewünschten Element wie etwa einem Bauteil oder Pontonelement, mit welchem sie verbunden werden soll, zu verbinden.

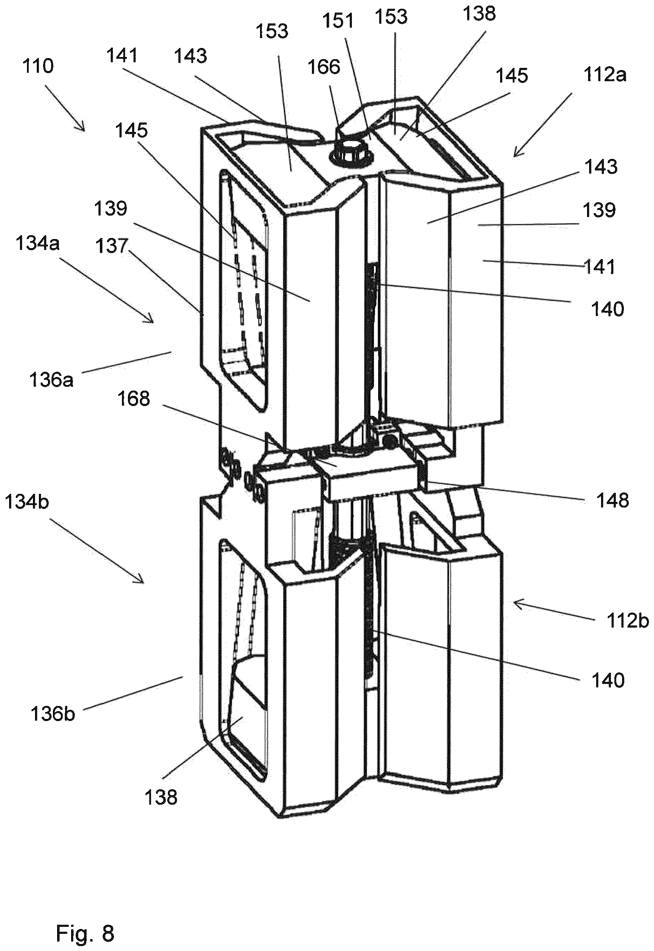

In Fig. 8 ist die Verbindungsvorrichtung der Fig. 7 in einem teilweise geschlossenen bzw. verspannten oder montierten Zustand gezeigt, in dem die Verbindungsvorrichtung 110 zwei Bauteile miteinander verbindet.

Die Verbindungsvorrichtung 110 umfasst zwei übereinander angeordnete Grundkörper 112a, 112b, die einstückig miteinander verbunden sind. An jedem Grundkörper 112a, 112b ist eine Verbindungseinheit 134a, 134b vorgesehen. Jede Verbindungseinheit 134a, 134b umfasst ein Befestigungselement 136a, 136b, wobei die zwei Befestigungselemente 136a, 136b fest miteinander verbunden sind. Die beiden miteinander verbundenen Befestigungselemente 136a und 136b und die beiden miteinander verbundenen Grundkörper 112a, 112b sind baugleich gestaltet und somit untereinander austauschbar.

Im Folgenden wird somit nur die Form der beiden miteinander verbundenen Befestigungselemente 136a, 136b beschrieben, da diese Form der Form der beiden miteinander verbundenen Grundkörper 112a, 112b entspricht.

Jedes Befestigungselement 136a, 136b weist die Grundform eines einseitig offenen, hohlen Profilelements mit einer Rückwand 137 und zwei Seitenwänden 139 auf, welches im Querschnitt C-förmig ausgebildet ist. Die Rückwand 137 des Befestigungselements 136a, 136b bildet eine Wand, an der Führungselemente vorgesehen sind. Die Führungselemente werden von den zwei Seitenwänden 139 des Befestigungselements 136a, 136b gebildet, wobei die Seitenwände 139 jeweils einen ersten Abschnitt 141 aufweisen, der senkrecht zur Rückwand 137 ausgerichtet ist und einen zweiten Abschnitt 143, der gegenüber dem ersten Abschnitt 141 nach innen geknickt ist.

Die Innenseite der Rückwand 137 und die Innenseiten der Seitenwände 139 bilden eine Nut, in der der Verstellkörper 138 verschiebbar ist. Die Außenwand des zweiten Abschnitts 143 dient, wie weiter unten beschrieben, als Anschlagsfläche für ein Bauteil.

An der Innenwand des ersten Abschnitts 141 der Seitenwände 139 befinden sich schräg verlaufende Seitenführungen 145, welche die gleiche Neigung aufweisen wie entsprechende, leistenartige Ansätze 147 an dem Verstellkörper 138. Die Seitenführung 145 ist somit Teil eines Führungselements, das mit einem einen leistenartigen Ansatz 147 umfassenden Gegenführungsmittel wechselwirkt.

Der Grundkörper 112a, 112b und das Befestigungselement 136a, 136b sind so angeordnet, dass ihre offenen Seiten zueinander weisen.

Zwischen jedem Grundkörper 112a, 112b und Befestigungselement 136a, 136b ist ein Verstellkörper 138 vorgesehen, der verschiebbar in dem Befestigungselement 136a, 136b bzw. Grundkörper 112a, 112b gelagert ist, wobei der Verstellkörper 138 entlang der Seitenführungen 145 geführt wird.

Der Verstellkörper 138 weist im Querschnitt gesehen einen mittleren Abschnitt 151 sowie zwei Endabschnitte 153 auf, die entgegengesetzt zueinander ausgerichtet sind (siehe Fig. 8). Die Endabschnitte 153 weisen jeweils eine Kontur auf, die komplementär zu dem Querschnitt des Befestigungselements136a, 136b bzw. des Grundkörpers 112a, 112b ausgebildet ist, so dass das Befestigungselement 136a, 136b bzw. der Grundkörper 112a, 112b die jeweiligen Endabschnitte 153 des Verstellkörpers 138 umgreifen.

Weiterhin weist der Verstellkörper 138 entlang seiner Längsachse eine Durchgangsbohrung 160 mit einem Gewinde auf, in welcher eine Verstellstange 140 in Form einer Spindel drehbar geführt ist. Die Querseiten des Verstellkörpers 138, welche zu dem Grundkörper 112a, 112b bzw. Befestigungselement 136a, 136b weisen, sind gegenüber der Längsachse des Verstellkörpers 138 geneigt. Der Verstellkörper 138 weist eine keilförmige Grundform auf, wobei die Keilspitzen beider Verstellkörper 138 im Gegensatz zu der ersten Ausführungsform der Verstellvorrichtung 10 jeweils nach innen weisen, bzw. zueinander weisen. In Längsrichtung des Verstellkörpers 138 gesehen, weist der Verstellkörper 138 eine geringere Länge auf als das Befestigungselement 136a, 136b.

Die beiden Spindeln der Verbindungsvorrichtung 110 sind einstückig miteinander verbunden und werden in einem Fixierungselement 168, das zwischen den beiden Grundkörpern 112a, 112b bzw. zwischen den beiden Befestigungselementen 136a, 136b vorgesehen ist, zwar drehbar, aber dennoch ortsfest gelagert. Hierfür sind entsprechende nicht dargestellte Blockierelemente vorgesehen.

Der Grundkörper 112a, 112b und das Befestigungselement 136a, 136b sind über Verbindungsstangen 148, die senkrecht zur Spindel stehen, miteinander verbunden. Die Verbindungsstangen 148 sind in dem Fixierungselement 168, welches die Spindel drehbar und ortsfest lagert, angeordnet.

Zur Betätigung der Verbindungsvorrichtung 110 sind an den freien Enden der Verstellstange 140 Stellschrauben 166 vorgesehen. Werden diese gedreht, bewegen sich beide Verstellkörper 138 entlang der Spindeln. Je nach Drehrichtung bewegen sich die beiden Verstellkörper 138 aufeinander zu oder voneinander weg.

Bewegen sich die Verstellkörper 138 aufeinander zu, gleiten die Verstellkörper 138 in den Seitenführungen. Hierdurch drückt jeder Verstellkörper 138 den an ihm anliegenden Grundkörper 112a, 112b und das an ihm anliegende Befestigungselement 136a, 136b auseinander, so dass die Verbindungsvorrichtung in ihre geöffnete oder ersten Funktionsstellung gelangt. Die Verbindungsstangen 148 sorgen dafür, dass das Befestigungselement 136a, 136b und der Grundkörper 112a, 112b sich in einer Ebene bewegen.

In dem Fall, in dem sich die Verstellkörper 138 voneinander wegbewegen, zieht jeder Verstellkörper 138 den an ihm anliegenden Grundkörper 112a, 112b und das an ihm anliegende Befestigungselement 136a, 136b zueinander, indem der Verstellkörper 138 an den geneigten Seitenführungen 145 entlanggeführt wird. Die Verbindungsvorrichtung 110 befindet sich in ihrer verspannten oder zweiten Funktionsstellung.

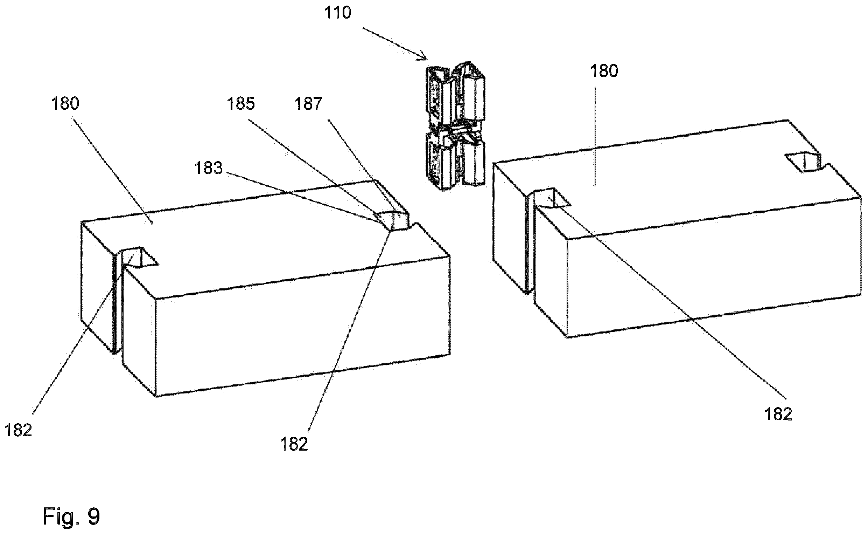

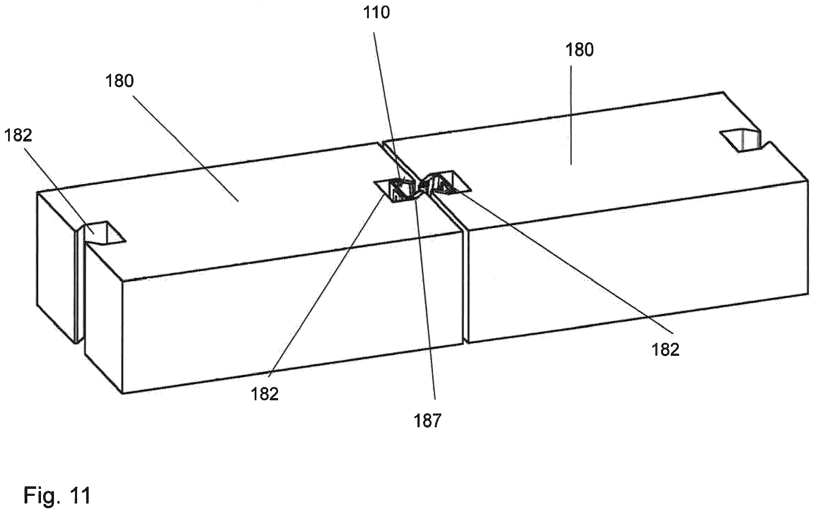

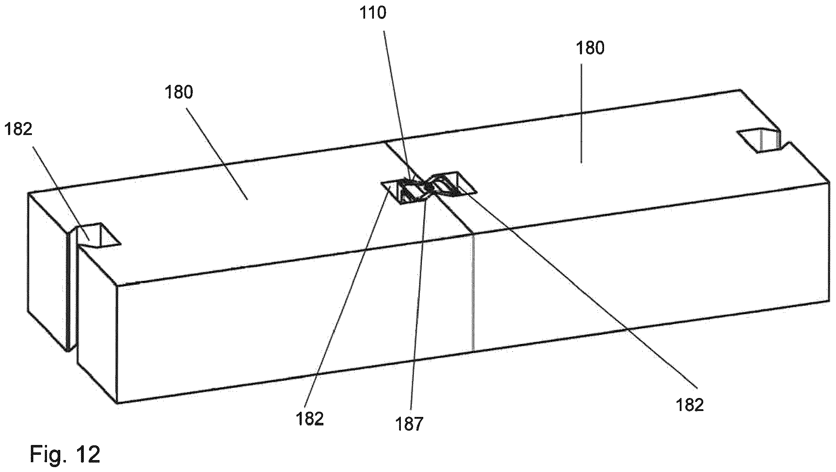

In den Figuren 9 bis 12 wird die Funktionsweise der Verbindungsvorrichtung 110 in Zusammenhang mit einer Pontonbrücke dargestellt.

Zur Montage wird die Verbindungsvorrichtung 110 in zwei gegenüberliegende Aussparungen 182 zweier nebeneinander angeordneter Bauteile wie Pontonelemente 180 eingeführt und vorpositioniert. Die beiden gegenüberliegenden Aussparungen 182 weisen im Querschnitt die gleiche Kontur auf wie die Verbindungsvorrichtung 110. Die Aussparung 182 ist als eine an den beiden Enden offene Nut ausgebildet und verfügt somit über eine Rückwand 183 und zwei Seitenwände, wobei jede Seitenwand einen ersten, senkrecht zur Rückwand stehenden Abschnitt 185 und einen gegenüber dem ersten Abschnitt geknickten zweiten Abschnitt 187 aufweist.

In der vorpositionierten Stellung ist der Abstand zwischen dem Befestigungselement 136a, 136b und dem Grundelement 112a, 112b größer als in der verspannten oder zweiten Funktionsstellung. Zwischen den beiden Pontonelementen 182 ist ein Spalt vorhanden.

Sobald die Verbindungsvorrichtung sich wunschgemäß in der Aussparung 182 zwischen zwei Bauteilen bzw. Pontonelementen 182 befindet, wird die Spindel mittels der an der Stirnseite der Spindel befindlichen Stellschraube 166 gedreht und das Befestigungselement 136a, 136b sowie der Grundkörper 112a, 112b nähern sich an. Hierbei liegen die abgeschrägten Seitenflächen 141 des Befestigungselements 136a, 136b bzw. des Grundkörpers 112a, 112b an dem abgeschrägten zweiten Abschnitt 187 der Seitenwand der Aussparung 182 an. Die beiden Pontonelemente 182 liegen ohne Spalt aneinander an.

Mit dieser Ausführungsform kann eine sehr enge Verbindung zwischen zwei Bauteilen erreicht werden. Mit Hilfe dieser Verbindungsvorrichtung ist es insbesondere möglich, dass zwei Bauteile ohne Zwischenspalt miteinander verbunden werden können.

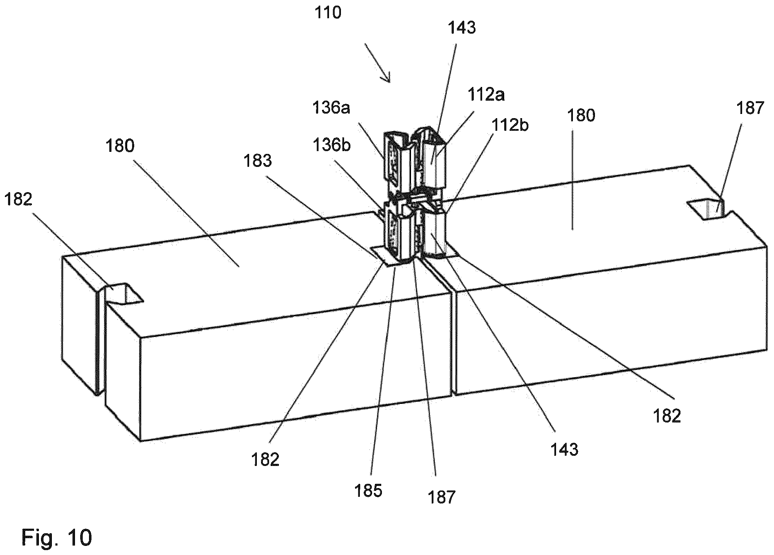

Bei der in den Fig. 9 und 10 dargestellten Ausführungsform einer Verbindungsvorrichtung können bei einer nicht dargestellten Variante einer der beiden Grundkörper und die entsprechende Verbindungseinheit weggelassen werden.

Wenn in den Figuren 3 bis 6 und 11 bis 14 auch nur zwei Pontonelemente 80, 180 dargestellt sind, die mittels der Verbindungsvorrichtung verbunden sind, so kann bei einer nicht dargestellten Ausführungsform eine Vielzahl von Pontonelementen miteinander verbunden werden.

Die Verbindung ist auch nicht, wie dargestellt, auf Querseiten des Pontonelements beschränkt. Bei einer nicht dargestellten Ausführungsform weisen die Pontonelemente auch an den Längsseiten entsprechende Aussparungen auf, so dass nicht nur längliche, sondern auch flächige Pontonbrückenelemente hergestellt werden können.

Wenn die Anwendung der Verbindungsvorrichtungen nur in Zusammenhang mit Pontonelementen dargestellt wurde, so können die Verbindungsvorrichtungen auch an beliebigen anderen Bauelementen eingesetzt werden, die eine entsprechende Aussparung zur Aufnahme wenigstens eines Abschnitts der Verbindungsvorrichtung aufweisen.

Es versteht sich, dass Merkmale, die bezüglich einer Ausführungsform beschrieben wurden, auch mit anderen Ausführungsformen kombiniert werden können. Der Gegenstand der Erfindung ist in den Patentansprüchen definiert.

## Patentansprüche

1. Verbindungsvorrichtung umfassend wenigstens einen Grundkörper (12a, 12b; 112a, 112b) und wenigstens eine Verbindungseinheit (34; 134a, 134b) mit
- einem Befestigungselement (36; 136),
- einem Verstellkörper (38; 138) mit einer Längsachse und
- einer Verstellvorrichtung,
wobei der Abstand zwischen dem Befestigungselement (36; 136) und dem Grundkörper (12a, 12b; 112a, 112b) veränderbar ist,
wobei der Grundkörper (12a, 12b; 112a, 112b) eine Wand mit einem ersten Führungselement aufweist,
wobei das Befestigungselement (36; 136) eine Wand mit einem zweiten Führungselement aufweist,
wobei die Wand des Grundkörpers (12a, 12b; 112a, 112b), an der das erste Führungselement vorgesehen ist, und die Wand des Befestigungselements, an der das zweite Führungselement vorgesehen ist, zueinander weisen,
wobei der Verstellkörper (38; 138) zwischen dem Grundkörper (12a, 12b; 112a, 112b) und dem Befestigungselement (36; 136) angeordnet ist und über eine erste Querseite (54) verfügt, die zum Grundkörper (12a, 12b; 112a, 112b) weist, sowie über eine zweite Querseite (54), die zum Befestigungselement (36; 136) weist,
wobei der Verstellkörper (38; 138) mittels der Verstellvorrichtung entlang einer Achse parallel zur Längsachse des Verstellkörpers (38; 138) verschiebbar ist und ein Gegenführungselement aufweist, das mit dem ersten oder zweiten Führungselement wechselwirkt, und wobei das Gegenführungselement des Verstellkörpers (38; 138) gegenüber der Längsachse des Verstellkörpers (38; 138) geneigt ist, **dadurch gekennzeichnet, dass** die Verstellvorrichtung eine Verstellstange (40; 140) und ein Verstellmittel umfasst, wobei die Verstellstange (40; 140) mit dem Verstellkörper (38; 138) verdrehbar verbunden ist und dass ein Fixierungselement (68; 168) vorgesehen ist, in dem die Verstellstange (40; 140) ortsfest und drehbar gelagert ist.

2. Verbindungsvorrichtung nach einem der vorhergehenden Ansprüche, **dadurch gekennzeichnet, dass** das erste Führungselement mit einem ersten Gegenführungselement am Verstellkörper (38; 138) und/oder das zweite Führungselement mit einem zweiten Gegenführungselement am Verstellkörper (38; 138) wechselwirken, wobei das erste Führungselement und das erste Gegenführungselement eine lineare Führungseinheit bilden und/oder das zweite Führungselement und das zweite Gegenführungselement jeweils eine lineare Führungseinheit bilden.

3. Verbindungsvorrichtung nach Anspruch 2, **dadurch gekennzeichnet, dass** das erste Führungselement und das erste Gegenführungselement im Querschnitt komplementär zueinander ausgebildet sind und/oder das zweite Führungselement und das zweite Gegenführungselement im Querschnitt komplementär zueinander ausgebildet sind.

4. Verbindungsvorrichtung nach Anspruch 2 oder 3, **dadurch gekennzeichnet, dass** das Führungselement oder das Gegenführungselement als Nut ausgebildet ist, wobei vorzugsweise wenigstens eine Seitenwand der Nut eine Seitenführung (145) aufweist.

5. Verbindungsvorrichtung nach einem der Ansprüche 2 bis 4, **dadurch gekennzeichnet, dass** das Führungselement und das Gegenführungselement jeweils einen Führungsabschnitt aufweisen, der die gleiche Neigung gegenüber der Längsachse des Verstellkörpers (38; 138) aufweist.

6. Verbindungsvorrichtung nach einem der vorhergehenden Ansprüche, **dadurch gekennzeichnet, dass** ein Verbindungsteil vorgesehen ist, welches das Befestigungselement (36; 136) und den Grundkörper (12a, 12b; 112a, 112b) verbindet, wobei das Verbindungsteil vorzugsweise eine Verbindungsstange (48; 148) aufweist.

7. Verbindungsvorrichtung nach einem der vorhergehenden Ansprüche, **dadurch gekennzeichnet, dass** das Befestigungselement (36; 136) und der Grundkörper (12a, 12b; 112a, 112b) die gleiche Form aufweisen.

8. Verbindungsvorrichtung nach einem der vorhergehenden Ansprüche, **dadurch gekennzeichnet, dass** der Grundkörper (12a, 12b; 112a, 112b) blockartig ausgebildet ist, wobei der Grundkörper (12a, 12b; 112a, 112b) einen mittleren Abschnitt (28a, 28b) und zwei entgegengesetzt liegende Endabschnitte (30a, 30b) aufweist, wobei an einem Endabschnitt (30a, 30b) die Verbindungseinheit (34; 134a, 134b) und an dem entgegengesetzt liegenden Endabschnitt (30a, 30b) eine weitere Verbindungseinheit (34; 134a, 134b) oder ein Bauteil vorgesehen ist.

9. Verbindungsvorrichtung nach Anspruch 8, **dadurch gekennzeichnet, dass** sich der Grundkörper (12a, 12b; 112a, 112b) zu zumindest einem Endabschnitt erweitert (30a, 30b),

10. Verbindungsvorrichtung nach einem der vorhergehenden Ansprüche, **dadurch gekennzeichnet, dass** zwei Grundkörper (12a, 12b; 112a, 112b) übereinander und im Abstand voneinander angeordnet sind, wobei die beiden Grundkörper (12a, 12b; 112a, 112b) miteinander verbunden sind.

11. Verbindungsvorrichtung nach Anspruch 10, **dadurch gekennzeichnet, dass** das Befestigungselement (36a; 136a) der am ersten Grundkörper (12a; 112a) vorgesehenen Verbindungeinheit und das Befestigungselement (36b; 136b) der am zweiten Grundkörper (12b; 112b) vorgesehenen Verbindungeinheit (34; 134a, 134b) mittels einer gemeinsamen Verstellvorrichtung verschiebbar sind und die erste Verbindungseinheit (34; 134a, 134b) achssymmetrisch zur zweiten Verbindungseinheit (34; 134a, 134b) ausgebildet ist.

12. Pontonbrücke umfassend wenigstens ein Pontonelement (80; 180) und wenigstens eine Verbindungsvorrichtung (10; 110) nach einem der vorhergehenden Ansprüche, wobei vorzugsweise wenigstens zwei Pontonelemente (80; 180) vorgesehen sind, die mittels einer Verbindungsvorrichtung (10; 110) miteinander verbunden sind.

13. Pontonbrücke nach Anspruch 12, **dadurch gekennzeichnet, dass** das Pontonelement (80; 180) eine Aussparung (82; 182) zur Aufnahme eines Abschnitts der Verbindungsvorrichtung (10; 110) aufweist, wobei der in der Aussparung aufgenommene Abschnitt der Verbindungsvorrichtung (10; 110) in der Aussparung (82; 182) verklemmbar ist.

14. Pontonbrücke nach Anspruch 13, **dadurch gekennzeichnet, dass** die Aussparung (82; 182) zur Aufnahme eines Abschnitts der Verbindungsvorrichtung (10; 110) im Querschnitt über eine Kontur verfügt, deren Grundform komplementär zu der Kontur des Abschnitts der Verbindungsvorrichtung (10; 110) ist, welche in der Aussparung (82; 182) des Pontonelements (80; 180) angeordnet ist.

15. Pontonbrücke nach einem der Ansprüche 13 oder 14, **dadurch gekennzeichnet, dass** die Aussparung (82; 182) eine Anschlagfläche aufweist, wobei vorzugsweise die Rückwand (183) und/oder die Seitenwand der Aussparung (82; 182) eine Anschlagfläche für das Befestigungselement (36; 136) bildet.

## Claims

1. A connecting device comprising at least one base body (12a, 12b; 112a, 112b) and at least one connecting unit (34; 134a, 134b) with
- a fastening element (36; 136),
- an adjustment body (38; 138) having a longitudinal axis, and
- an adjustment device,
wherein the distance between the fastening element (36; 136) and the base body (12a, 12b; 112a, 112b) is variable,
wherein the base body (12a, 12b; 112a, 112b) has a wall with a first guide element,
wherein the fastening element (36; 136) has a wall with a second guide element,
wherein the wall of the base body (12a, 12b; 112a, 112b) on which the first guide element is provided and the wall of the fastening element on which the second guide element is provided face each other,
wherein the adjustment body (38; 138) is arranged between the base body (12a, 12b; 112a, 112b) and the fastening element (36; 136) and has a first transverse side (54) facing the base body (12a, 12b; 112a, 112b) and a second transverse side (54) facing the fastening element (36; 136),
wherein the adjustment body (38; 138) is displaceable by means of the adjustment device along an axis parallel to the longitudinal axis of the adjustment body (38; 138) and has a counter-guide element which interacts with the first or second guide element, and wherein the counter-guide element of the adjustment body (38; 138) is inclined with respect to the longitudinal axis of the adjustment body (38; 138), **characterized in that** the adjustment device comprises an adjustment rod (40; 140) and an adjustment means, the adjustment rod (40; 140) being rotatably connected to the adjustment body (38; 138), and **in that** a fixing element (68; 168) is provided in which the adjustment rod (40; 140) is mounted in a stationary and rotatable manner.

2. The connecting device according to one of the preceding claims, **characterized in that** the first guide element interacts with a first counter-guide element on the adjustment body (38; 138) and/or the second guide element interacts with a second counter-guide element on the adjustment body (38; 138), the first guide element and the first counter-guide element forming a linear guide unit and/or the second guide element and the second counter-guide element each forming a linear guide unit.

3. The connecting device according to claim 2, **characterised in that** the first guide element and the first counter-guide element are formed complementary to each other in cross-section and/or the second guide element and the second counter-guide element are formed complementary to each other in cross-section.

4. The connecting device according to claim 2 or 3, **characterised in that** the guide element or the counter-guide element is formed as a groove, wherein preferably at least one side wall of the groove has a side guide (145).

5. The connecting device according to any one of claims 2 to 4, **characterized in that** the guide element and the counter-guide element each comprise a guide portion having the same inclination with respect to the longitudinal axis of the adjustment body (38; 138).

6. The connecting device according to any one of the preceding claims, **characterized in that** a connecting part is provided which connects the fixing element (36; 136) and the base body (12a, 12b; 112a, 112b), with the connecting part preferably comprising a connecting rod (48; 148).

7. The connecting device according to any one of the preceding claims, **characterized in that** the fastening element (36; 136) and the base body (12a, 12b; 112a, 112b) have the same shape.

8. The connecting device according to any one of the preceding claims, **characterized in that** the base body (12a, 12b; 112a, 112b) is block-like, with the base body (12a, 12b; 112a, 112b) having a central section (28a, 28b) and two opposite end sections (30a, 30b), with the connecting unit (34; 134a, 134b) being provided on one end section (30a, 30b) and a further connecting unit (34; 134a, 134b) or a component being provided on the opposite end section (30a, 30b).

9. The connecting device according to claim 8, **characterized in that** the base body (12a, 12b; 112a, 112b) widens (30a, 30b) towards at least one end portion.

10. The connecting device according to any one of the preceding claims, **characterized in that** two base bodies (12a, 12b; 112a, 112b) are arranged one above the other and spaced apart from one another, with the two base bodies (12a, 12b; 112a, 112b) being connected to one another.

11. The connecting device according to claim 10, **characterized in that** the fastening element (36a; 136a) of the connecting unit provided on the first base body (12a; 112a) and the fastening element (36b; 136b) of the connecting unit (34; 134a, 134b) provided on the second base body (12b; 112b) are displaceable by means of a common adjustment device, and **in that** the first connecting unit (34; 134a, 134b) is formed axially symmetrically with respect to the second connecting unit (34; 134a, 134b).

12. A pontoon bridge comprising at least one pontoon element (80; 180) and at least one connecting device (10; 110) according to any one of the preceding claims, wherein preferably at least two pontoon elements (80; 180) are provided which are connected to one another by means of a connecting device (10; 110).

13. The pontoon bridge according to claim 12, **characterized in that** the pontoon element (80; 180) comprises a recess (82; 182) for receiving a portion of the connecting device (10; 110), wherein the portion of the connecting device (10; 110) received in the recess can be clamped in the recess (82; 182).

14. The pontoon bridge according to claim 13, **characterized in that** the recess (82; 182) for receiving a section of the connecting device (10; 110) has, in cross-section, a contour whose basic shape is complementary to the contour of the section of the connecting device (10; 110) which is arranged in the recess (82; 182) of the pontoon element (80; 180).

15. The pontoon bridge according to any one of claims 13 or 14, **characterized in that** the recess (82; 182) has a stop surface, preferably the rear wall (183) and/or the side wall of the recess (82; 182) forming a stop surface for the fastening element (36; 136).

## Revendications

1. Dispositif de liaison incluant au moins un corps de base (12a, 12b; 112a, 112b) et au moins une unité de liaison (34 ; 134a, 134b) pourvue
- d'un élément de fixation (36 ; 136),
- d'un corps de réglage (38 ; 138) présentant un axe longitudinal et
- d'un agencement de réglage,
sachant que la distance comprise entre l'élément de fixation (36 ; 136) et le corps de base (12a, 12b; 112a, 112b) est variable,
ledit corps de base (12a, 12b ; 112a, 112b) comportant une paroi munie d'un premier élément de guidage,
ledit élément de fixation (36 ; 136) présentant une paroi dotée d'un second élément de guidage,
ladite paroi du corps de base (12a, 12b ; 112a, 112b) sur laquelle le premier élément de guidage est prévu, et ladite paroi de l'élément de fixation sur laquelle le second élément de guidage est prévu, étant orientées l'une vers l'autre,
sachant que le corps de réglage (38 ; 138) est interposé entre le corps de base (12a, 12b ; 112a, 112b) et l'élément de fixation (36; 136), et est doté d'un premier côté transversal (54) pointant vers le corps de base (12a, 12b ; 112a, 112b), ainsi que d'un second côté transversal (54) pointant vers l'élément de fixation (36 ; 136),
ledit corps de réglage (38 ; 138) pouvant être déplacé le long d'un axe au moyen de l'agencement de réglage, parallèlement à l'axe longitudinal dudit corps de réglage (38 ; 138), et étant nanti d'un élément de contre-guidage qui interagit avec le premier ou le second élément de guidage, lequel élément de contre-guidage dudit corps de réglage (38 ; 138) étant incliné par rapport audit axe longitudinal du corps de réglage (38 ; 138), **caractérisé par le fait que** l'agencement de réglage comprend une tige de réglage (40 ; 140) et un moyen de réglage, ladite tige de réglage (40 ; 140) étant reliée au corps de réglage (38 ; 138) avec faculté de rotation ; et **par le fait qu'**il est prévu un élément (68 ; 168) de consignation à demeure, dans lequel ladite tige de réglage (40 ; 140) est montée de manière fixe et rotative.

2. Dispositif de liaison selon l'une des revendications précédentes, **caractérisé par le fait que** le premier élément de guidage intergit avec un premier élément de contre-guidage implanté sur le corps de réglage (38 ; 138) et/ou le second élément de guidage intergit avec un second élément de contre-guidage implanté sur ledit corps de réglage (38 ; 138), ledit premier élément de guidage et ledit premier élément de contre-guidage formant une unité de guidage linéaire, et/ou ledit second élément de guidage et ledit second élément de contre-guidage formant une unité respective de guidage linéaire.

3. Dispositif de liaison selon la revendication 2, **caractérisé par le fait que** le premier élément de guidage et le premier élément de contre-guidage sont de réalisations mutuellement complémentaires en coupe transversale, et/ou le second élément de guidage et le second élément de contre-guidage sont de réalisations mutuellement complémentaires en coupe transversale.

4. Dispositif de liaison selon la revendication 2 ou 3, **caractérisé par le fait que** l'élément de guidage ou l'élément de contre-guidage est réalisé sous la forme d'une rainure, au moins une paroi latérale de ladite rainure étant préférentiellement munie d'un guide latéral (145).

5. Dispositif de liaison selon l'une des revendications 2 à 4, **caractérisé par le fait que** l'élément de guidage et l'élément de contre-guidage sont pourvus, à chaque fois, d'une zone de guidage présentant la même inclinaison par rapport à l'axe longitudinal du corps de réglage (38 ; 138).

6. Dispositif de liaison selon l'une des revendications précédentes, **caractérisé par** la présence d'une partie de liaison reliant l'élément de fixation (36 ; 136) et le corps de base (12a, 12b ; 112a, 112b), ladite partie de liaison étant préférentiellement dotée d'une tige de liaison (48 ; 148).

7. Dispositif de liaison selon l'une des revendications précédentes, **caractérisé par le fait que** l'élément de fixation (36 ; 136) et le corps de base (12a, 12b ; 112a, 112b) possèdent la même forme.

8. Dispositif de liaison selon l'une des revendications précédentes, **caractérisé par le fait que** le corps de base (12a, 12b ; 112a, 112b) est de réalisation du type bloc, ledit
corps de base (12a, 12b ; 112a, 112b) incluant une région médiane (28a, 28b) et deux régions extrêmes (30a, 30b) tournées à l'opposé, l'unité de liaison (34 ; 134a, 134b), et une autre unité de liaison (34 ; 134a, 134b) ou une pièce structurelle, étant respectivement prévues au niveau d'une région extrême (30a, 30b) et de la région extrême (30a, 30b) tournée à l'opposé.

9. Dispositif de liaison selon la revendication 8, **caractérisé par le fait que** le corps de base (12a, 12b ; 112a, 112b) s'élargit en direction d'au moins une région extrême (30a, 30b).

10. Dispositif de liaison selon l'une des revendications précédentes, **caractérisé par le fait que** deux corps de base (12a, 12b ; 112a, 112b) sont placés en superposition et à distance l'un de l'autre, les deux corps de base (12a, 12b ; 112a, 112b) étant reliés l'un à l'autre.

11. Dispositif de liaison selon la revendication 10, **caractérisé par le fait que** l'élément de fixation (36a ; 136a) de l'unité de liaison prévue sur le premier corps de base (12a ; 112a), et l'élément de fixation (36b ; 136b) de l'unité de liaison (34 ; 134a, 134b) prévue sur le second corps de base (12b ; 112b), peuvent être déplacés au moyen d'un agencement de réglage commun, et la première unité de liaison (34 ; 134a, 134b) est réalisée avec symétrie axiale par rapport à la seconde unité de liaison (34 ; 134a, 134b).

12. Pont flottant comprenant au moins un élément de ponton (80 ; 180) et au moins un dispositif de liaison (10 ; 110) conforme à l'une des revendications précédentes, sachant qu'il est prévu, de préférence, deux éléments de ponton (80 ; 180) reliés l'un à l'autre au moyen d'un dispositif de liaison (10 ; 110).

13. Pont flottant selon la revendication 12, **caractérisé par le fait que** l'élément de ponton (80 ; 180) comporte un évidement (82 ; 182) conçu pour recevoir un tronçon du dispositif de liaison (10 ; 110), auquel cas le tronçon dudit dispositif de liaison (10 ; 110), logé dans l'évidement, peut être bloqué dans ledit évidement (82 ; 182).

14. Pont flottant selon la revendication 13, **caractérisé par le fait que** l'évidement (82 ; 182) conçu pour recevoir un tronçon du dispositif de liaison (10 ; 110) est pourvu, en coupe transversale, d'un profil dont la configuration de base est complémentaire de celle du profil dudit tronçon du dispositif de liaison (10 ; 110) qui est logé dans ledit évidement (82 ; 182) de l'élément de ponton (80 ; 180).

15. Pont flottant selon l'une des revendications 13 ou 14, **caractérisé par le fait que** l'évidement (82 ; 182) présente une surface de butée, sachant que, de préférence, la paroi postérieure (183) et/ou la paroi latérale dudit évidement (82 ; 182) forme(nt) une surface de butée dédiée à l'élément de fixation (36 ; 136).
